# EUROPÄISCHE PATENTANMELDUNG

(11) **EP 2 899 404 A1**
(43) Veröffentlichungstag der Anmeldung: **29.07.2015**
(21) Anmeldenummer: 14193081.8
(22) Anmeldetag: 13.11.2014
(51) Int. Cl.: F04D 13/06, F04D 29/02, F04D 29/22, B29C 65/02

(54) **Kreiselpumpenlaufrad**

(30) Priorität: 28.01.2014 DE 102014201487
(71) Anmelder: Bühler Motor GmbH, 90459 Nürnberg (DE)
(72) Erfinder: Bernreuther, Georg, 90449 Nürnberg (DE); Ihle, Olai, 90542 Eckental (DE); Weiske, Klaus, 90571 Schwaig (DE)

(57) **Zusammenfassung**

Die Erfindung betrifft ein Kreiselpumpenlaufrad (1) mit Pumpenflügeln (2) aus einem spritzgusstechnisch verarbeitbarem Kunststoffmaterial, für eine elektromotorische Kreiselpumpe, bestehend aus einem ein Lager (10) umfassenden Grundkörper (3), an welchem einerseits ein permanentmagnetischer Rotor (4) und andererseits eine Deckscheibe (5) anschließt, welche an den Grundkörper (3) montiert ist. Aufgabe der Erfindung ist es bei einem Kreiselpumpenrotor der eingangs genannten Gattung dafür zu Sorge zu tragen, dass er einfach aufgebaut ist, einen erhöhten Wirkungsgrad aufweist und wirtschaftlich herstellbar ist. Diese Aufgabe wird erfindungsgemäß durch das Kennzeichen des Anspruchs 1 gelöst.

## Beschreibung

Die Erfindung betrifft ein Kreiselpumpenlaufrad (1) mit Pumpenflügeln (2) aus einem spritzgusstechnisch verarbeitbarem Kunststoffmaterial, für eine elektromotorische Kreiselpumpe, bestehend aus einem ein Lager (10) umfassenden Grundkörper (3), an welchem einerseits ein permanentmagnetischer Rotor (4) und andererseits eine Deckscheibe (5) anschließt, welche an den Grundkörper (3) montiert ist.

Kreiselpumpen werden häufig als Zusatzwasserpumpen in Kraftfahrzeugen eingesetzt und unterstützen meist riemengetriebene Hauptkühlwasserpumpen. Sie sind in der Regel auch dank deren hervorragender Steuerbarkeit in bürstenlosen Gleichstrommotoren integriert. Diese Motoren besitzen einen bewickelten Stator und einen permanentmagnetischer Rotor welcher eine kompakte Baugruppe mit dem Kreiselpumpenlaufrad bildet. Die Rotoren können sowohl als Innenläufer als auch als Außenläufer ausgeführt sein. Das Kreiselpumpenlaufrad befindet sich dabei in einem Nassraum der von einem den Stator aufnehmenden Trockenraum durch eine Trennwand abgedichtet ist. Kreiselpumpenlaufräder bestehen regelmäßig aus einem permanentmagnetischen Bereich und einen hydraulischen Bereich. Der hydraulische Bereich umfasst eine Scheibe und daran anschließende Pumpenflügel welche das Pumpenmedium radial nach außen schleudern und dadurch einen Pumpendruck erzeugen. Es sind offene Kreiselpumpenlaufräder bekannt und geschlossene, welche eine Deckscheibe aufweisen. Kreiselpumpenlaufräder mit Deckscheibe weisen einen höheren Wirkungsgrad auf, sind aber schwieriger herzustellen. Bei spritzgusstechnisch hergestellten Kreiselpumpenlaufrädern ist insbesondere die Entformung der relativ komplizierten Form problematisch. Deshalb werden die Deckscheiben oft separat hergestellt und anschließend montiert.

Ein gattungsgemäßes Kreiselpumpenlaufrad mit Deckscheibe ist aus der WO 2011/131251 A1 bekannt. Dieses besteht aus spritzgusstechnisch verarbeitbarem Kunststoffmaterial, wobei der Grundkörper mit dem permanentmagnetischen Rotor einstückig ist und durchgehend aus einem kunststoffgebundenen Magnetmaterial besteht. Die Flügelräder sind mit der Deckscheibe einstückig und bestehen aus einem Kunststoffmaterial ohne Permanentmagnetbestandteile. Durch die Trennung in zwei Bauteile können die mechanischen bzw. permanentmagnetischen Eigenschaften der Funktion entsprechend optimiert werden. Da allerdings auch der Grundkörper Permanentmagnetmaterial enthält, erhöht sich der Materialaufwand. Dies wirkt sich insbesondere bei Verwendung höherwertiger Permanentmagnetmaterialien aus. Bei dem bekannten Kreiselpumpenlaufrad weisen die Pumpenflügel stets eine Breite auf, die der Distanz vom Grundkörper bis zur Deckscheibe entspricht, so dass kein Zwischenraum entsteht. Untersuchungen haben jedoch gezeigt, dass es strömungstechnisch günstiger ist die Pumpenflügel innen eine Einlaufschräge aufweisen. Diese wäre jedoch bei der bekannten Pumpe fertigungstechnisch nicht oder nur mit sehr hohem Aufwand realisierbar.

Daher ist es Aufgabe der Erfindung bei einem Kreiselpumpenrotor der eingangs genannten Gattung dafür zu Sorge zu tragen, dass er einfach aufgebaut ist, einen erhöhten Wirkungsgrad aufweist und wirtschaftlich herstellbar ist.

Diese Aufgabe wird erfindungsgemäß durch das Kennzeichen des Anspruchs 1 gelöst. Dadurch, dass die Pumpenflügel zweiteilig ausgebildet sind, wobei Basisflügelsegmente, mit dem Grundkörper einstückig sind und Deckscheibenflügelsegment mit der Deckscheibe einstückig sind, bestehen gestalterische Möglichkeiten, die eine optimierte Flügelgeometrie zulassen und damit verbesserte Wirkungsgrade gestatten, wobei einfache Werkzeuge verwendbar sind.

Weiterbildungen der Erfindung werden in den Unteransprüchen dargestellt. Pumpenlaufräder weisen meist Strömungsflächen auf die gekrümmt sind. Wenn solche Bauteile zweiteilig ausgebildet sind und an solchen Kurvenbereichen montiert werden sollen ergeben sich erhebliche Probleme, weil solche Konturen schwer zu berechnen sind, insbesondere Wenn Schwindungsprobleme mit berücksichtigt werden müssen. Deshalb ist bei einer besonders bevorzugten Weiterbildung der Erfindung vorgesehen, dass im Wesentlichen alle axialen, dem Grundkörper benachbarten Begrenzungsflächen der Deckscheibenflügelsegmente in einer gemeinsamen Ebene liegen. Wenn diese axialen Begrenzungsflächen auch als Anlageflächen dienen bestehen definierte berechenbare Verhältnisse.

Eine hohe mechanische Festigkeit und eine genaue Gestaltung der Verbindungsstelle zwischen der Deckscheibe und dem Grundkörper ist dadurch erreichbar, dass die Deckscheibenflügelsegmente in Nuten des Grundkörpers eingreifen.

Beim Schweißen oder Kleben solcher Teile, die in Nuten eingreifen, besteht die Möglichkeit, dass überschüssiges Material sich in diesen Nuten ansammelt und nicht in den Bereich der Strömungskontur geraten kann. Als Schweißverfahren wird hier das Ultraschallschweißen bevorzugt.

Alternativ besteht jedoch auch die Möglichkeit dass die Deckscheibenflügelsegmente mit dem Grundkörper durch Heißverprägen von Verbindungszapfen verbunden sind, welche sich vorzugsweise von den Deckscheibenflügelsegmenten durch daran angepasste Ausnehmungen des Grundkörpers erstrecken.

Im Bereich nahe der Drehachse wäre aufgrund der Strömungskontur eine sehr tiefe Nut vonnöten um die vorher genannten Vorteile nutzen zu können. Zudem hat sich durch Untersuchungen gezeigt, dass Einlaufschrägen den Pumpenwirkungsgrad deutlich erhöhen. Aus diesen Gründen ist es vorteilhaft, dass die Basisflügelsegmente radial innerhalb der Deckscheibenflügelsegmente angeordnet sind, an welche sie anschließen. Die Einlaufschrägen sind dabei so gestaltet dass sich die Flügelbreite der Basisflügelsegmente durch die Einlaufschrägen von einem Minimalwert radial innen bis zu einem Maximalwert radial außen erweitert. Dabei ist weiter vorgesehen, dass der Maximalwert der Flügelbreite der Basisflügelsegmente einer Flügelbreite der Deckscheibenflügelsegmente in einem radial inneren an die Basisflügelsegmente anschließenden Bereich entspricht.

Es ergibt sich aufgrund der Einlaufschrägen, dass zwischen den Basisflügelsegmenten und der Deckscheibe ein sich nach radial außen zu den Deckscheibenflügelsegmenten hin verengender Freiraum vorhanden ist.

Ein besonders guter Wirkungsgrad ergibt sich, wenn der Grundkörper eine Strömungsfläche aufweist, die von einer von einem Saugstutzen ausgehenden Zylinderringfläche kontinuierlich in eine Kreisringfläche übergeht, wobei die Strömungsfläche radial durch die Pumpenflügel begrenzt ist und in einem Spiralförmigen Verlauf durchgängig in sich geschlossen ist.

Ein Ausführungsbeispiel der Erfindung wird nachfolgend anhand eines Beispieles näher erläutert. Es zeigen:
Fig. 1 einen Schnitt durch ein erfindungsgemäßes Kreiselpumpenlaufrad,
Fig. 2 einen vergrößerten Ausschnitt A aus Fig. 1,
Fig. 3 eine Deckscheibe des Kreiselpumpenlaufrads,
Fig. 4 einen Grundkörper des Kreiselpumpenlaufrads,
Fig. 5 einen Schnitt durch einen Kreiselpumpenmotor,
Fig. 6 eine dreidimensionale Ansicht der Kreiselpumpe,
Fig. 7 einen Schnitt durch eine Variante des Kreiselpumpenlaufrads,
Fig. 8 einen vergrößerten Ausschnitt aus Fig. 7,
Fig. 9 eine dreidimensionale Darstellung einer Deckscheibe,
Fig. 10 einen Schnitt durch eine weitere Variante des Kreiselpumpenlaufrads,
Fig .11 einen vergrößerten Ausschnitt aus Fig. 10,
Fig. 12 eine dreidimensionale Darstellung einer Variante der Deckscheibe und
Fig. 13 einen vergrößerten Ausschnitt aus Fig. 12.

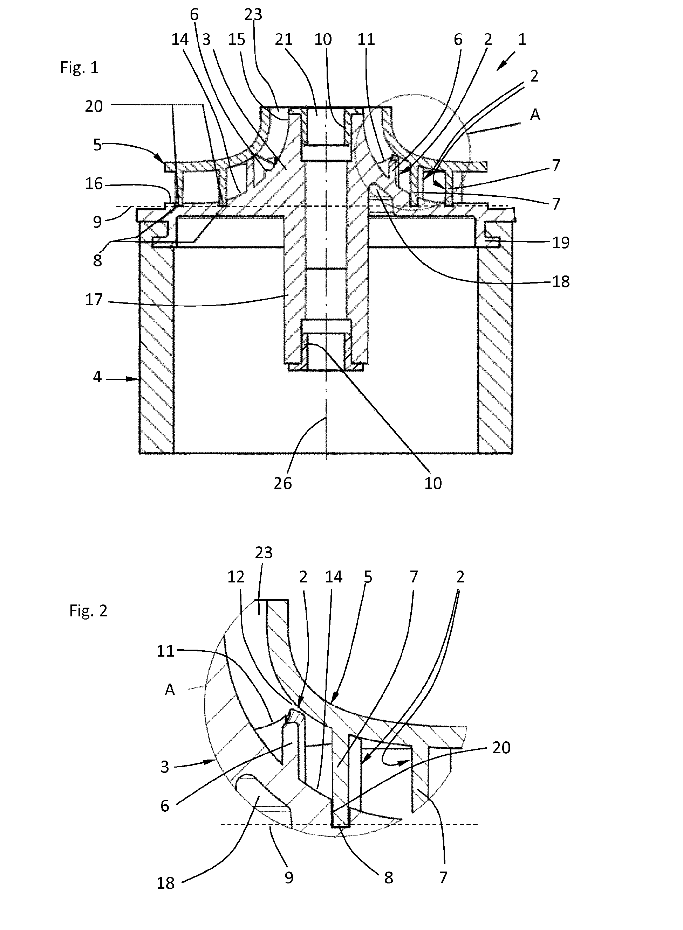

Fig. 1 zeigt einen Schnitt durch ein erfindungsgemäßes Kreiselpumpenlaufrad 1, mit einem Grundkörper 3, einem permanentmagnetischen Rotor 4 und einer Deckscheibe 5. Der Grundkörper 3 weist ein Lagertragrohr 17 auf in dem zwei Lager 10 aufgenommen sind, die hier als Kunststoff-Gleitlager ausgeführt sind - alternativ wäre auch ein Keramik-Gleitlager verwendbar. Die Kunststoff-Gleitlager sind in das Lagertragrohr eingepresst. Das Lagertragrohr 17 ist einstückig mit dem Grundkörper 3. Weiter weist der Grundkörper 3 eine Strömungsfläche 14 auf, die von einer Zylinderringfläche 15 ausgehend sich kontinuierlich im Durchmesser erweitert und sich bis zu einer Kreisringfläche 16 erstreckt. Radial wird die Strömungsfläche 14 durch Pumpenflügel 2 begrenzt. Eine Mehrzahl von Pumpenflügeln 2 sind zweiteilig ausgebildet, mit je einem Basisflügelsegment 6, das mit dem Grundkörper 3 einstückig ist und einem Deckscheibenflügelsegment 7 das mit der Deckscheibe (5) einstückig ist. Die Deckscheibenflügelsegmente 7 greifen in Nuten 20 ein, die sich von der Strömungsfläche 14 ausgehend bis zu einer Ebene 9 in das Material des Grundkörpers 3 erstrecken. Axiale Begrenzungsflächen 8 der Deckscheibenflügelsegmente 7 liegen auf der gemeinsamen Ebene 9. Die Basisflügelsegmente 6 weisen eine Einlaufschräge 11 auf, die sich von einem zentrumsnahen Bereich mit verringerter Flügelbreite zu den Deckscheibenflügelsegmenten 7 mit maximaler Flügelbreite hin erstreckt. Auf der den Basisflügelsegmenten 6 entgegengesetzt liegenden Seite des Grundkörpers 3 ist zwecks Vermeidung von unerwünschten Materialanhäufungen eine Aussparung 18 eingeformt. Der Permanentmagnetische Rotor 4 besteht hier aus einem kunststoffgebundenen Magnetkörper, der um einen im Querschnitt L-förmigen Bereich 19 des Grundkörpers 3 herum urgeformt ist. Hierdurch ist ein Formschluss gegeben, der zusätzliche, hier nicht dargestellte Verdrehungssicherung in Form von Ausnehmungen oder Vorsprüngen aufweist. Weiter ist in Fig. 1 eine ringförmige Ansaugöffnung 23, eine Lagerausnehmung 21 und eine Drehachse 26 dargestellt.

Fig. 2 zeigt eine vergrößert dargestellte Ausschnitt aus Fig. 1, mit dem Grundkörper 3, den Pumpenflügeln 2, der Deckscheibe 5, dem Basisflügelsegment 6, den Deckscheibenflügelsegmenten 7, der Nut 20, der Begrenzungsfläche 8, der Ebene 9, der Ansaugöffnung 23 und der Einlaufschräge 11, die zwischen der Deckscheibe 5 und dem Basisflügelsegment 6 eine Freisparung 12 zur Folge hat.

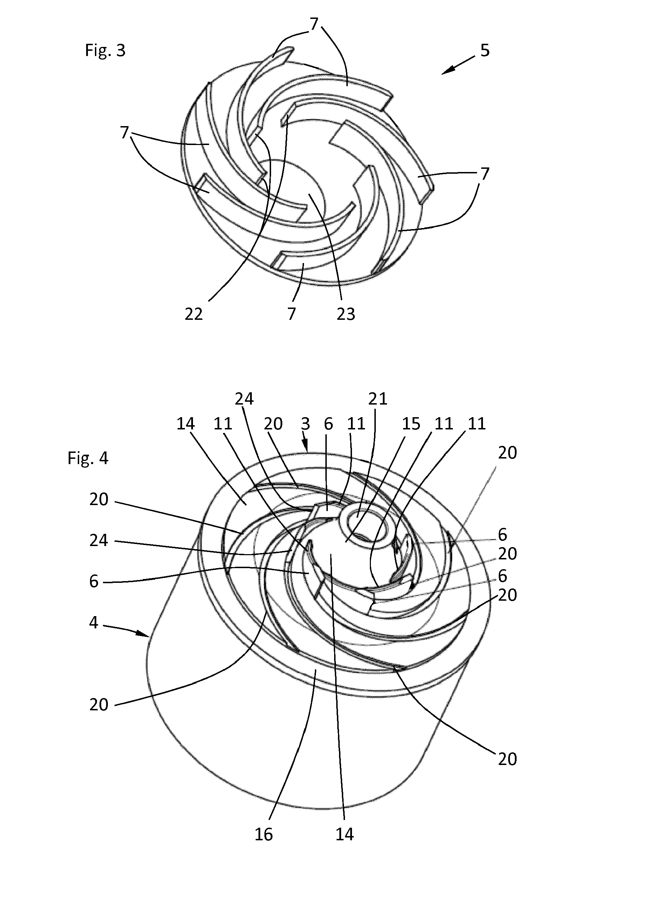

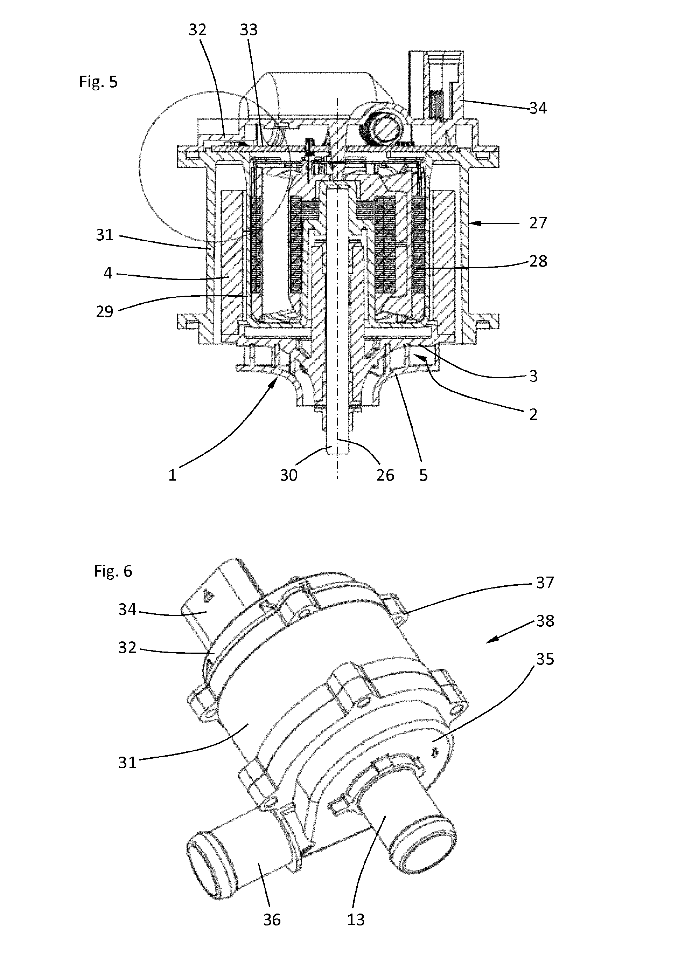

Fig. 3 zeigt die Deckscheibe 5 des Kreiselpumpenlaufrads als Einzelteil, mit den Deckscheibenflügelsegmenten 7 und der Ansaugöffnung 23, die mit einem Saugstutzen 13 (siehe Fig. 6) korrespondiert. Die Deckscheibenflügelsegmente 7 weisen an ihren radial inneren Enden Begrenzungen 22 auf, die mit Anlageflächen 24 (siehe Fig. 4) des Grundkörpers 3 korrespondieren.

Fig. 4 zeigt den Grundkörper 3 des Kreiselpumpenlaufrads, mit dem permanentmagnetischen Rotor 4, den Nuten 20, den Basisflügelsegmenten 6, den Einlaufschrägen 11, den Anlageflächen 24, der Lagerausnehmung 21 und der Strömungsfläche 24, mit der Zylinderringfläche 15 und der Kreisringfläche 16. Die Nuttiefe der Nuten 20 nimmt in Richtung Basisflügelsegmenten 6 zu.

Fig. 5 zeigt einen Schnitt durch einen Kreiselpumpenmotor 27, mit dem Kreiselpumpenlaufrad 1, mit dem Permanentmagnetrotor, dem Grundkörper 3, der Deckscheibe 5 und den Pumpenflügeln 2, einer Achse 30, einer Trennwand 29, die einstückig ist mit einem Motorgehäuse 31, einem Gehäusedeckel 32, der mit einem Anschlussstecker 34 versehen ist und einer Leiterplatte 33. Ein stirnseitiges Pumpengehäuse 35 ist in Fig. 6 dargestellt.

Fig. 6 zeigt eine dreidimensionale Ansicht einer Kreiselpumpe 38, mit einem Pumpengehäuse 35, einem Saugstutzen 13, dem Motorgehäuse 31, dem Gehäusedeckel 32, dem Anschlussstecker und einer Vielzahl von Anschraubaugen 37. Die Anschraubaugen dienen auch zur Befestigung von Gehäusedeckel 32 und Pumpengehäuse 35 am Motorgehäuse 31.

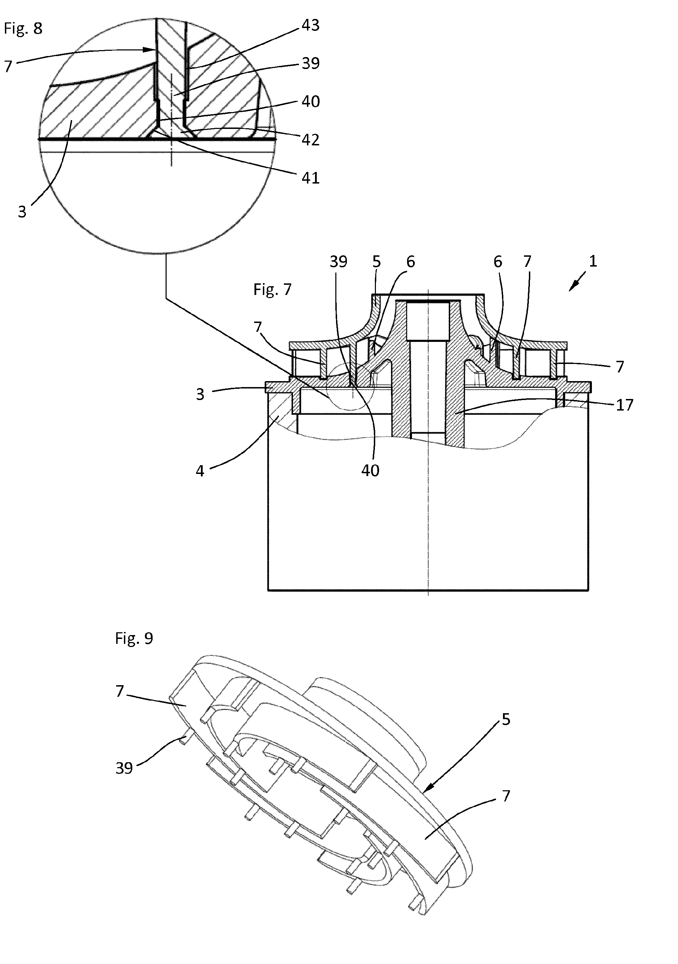

Fig. 7 zeigt einen Schnitt durch eine Variante des Kreiselpumpenlaufrads 1, mit dem Grundkörper 3, der Deckscheibe 5, den Basisflügelsegmenten 6, den Decksscheibenflügelsegmenten 7, dem permanentmagnetischen Rotor 4 und dem Lagertragrohr 17. Die Variante ist durch Verbindungszapfen 39 gekennzeichnet, die sich von den Deckscheibenflügelsegmenten 7 axial durch Verbindungsausnehmungen 40 erstrecken.

Fig. 8 zeigt einen vergrößerten Ausschnitt aus Fig. 7. Hier ist ein sich von einem Deckscheibenflügelsegment 7 erstreckender Verbindungszapfen 39 und eine Verbindungsausnehmung 40 deutlicher zu erkennen. Die Darstellung zeigt einen durch Heißumformung in eine kegelförmige Erweiterung 41 verprägten Endabschnitt 42 des Verbindungszapfens 39. Hierzu ist der Verbindungszapfen so dimensioniert, dass er vor der Umformung aus der Verbindungsausnehmung 40 vortritt. Das vortretende Material wird dann unter Wärmeeinwirkung in die kegelförmigen Erweiterungen 41 verdrängt. Eine geringfügig im Durchmesser vergrößerte Einführhilfe 43 am Beginn der Verbindungsausnehmung 40 erleichtert das Fügen der Deckscheibe 5 in den Grundkörper 3, insbesondere der Verbindungszapfen 39 in die Verbindungsausnehmungen 40.

Fig. 9 ist eine dreidimensionale Darstellung einer Deckscheibe 5, mit den sich von den Deckscheibenflügelsegmenten 7 axial erstreckenden Verbindungszapfen 39. Jedes Deckscheibenflügelsegment 7 trägt hier zwei Verbindungszapfen 39. Die Anzahl der Verbindungszapfen 39 hängt von der Größe der Deckscheibe und den mechanischen Anforderungen ab.

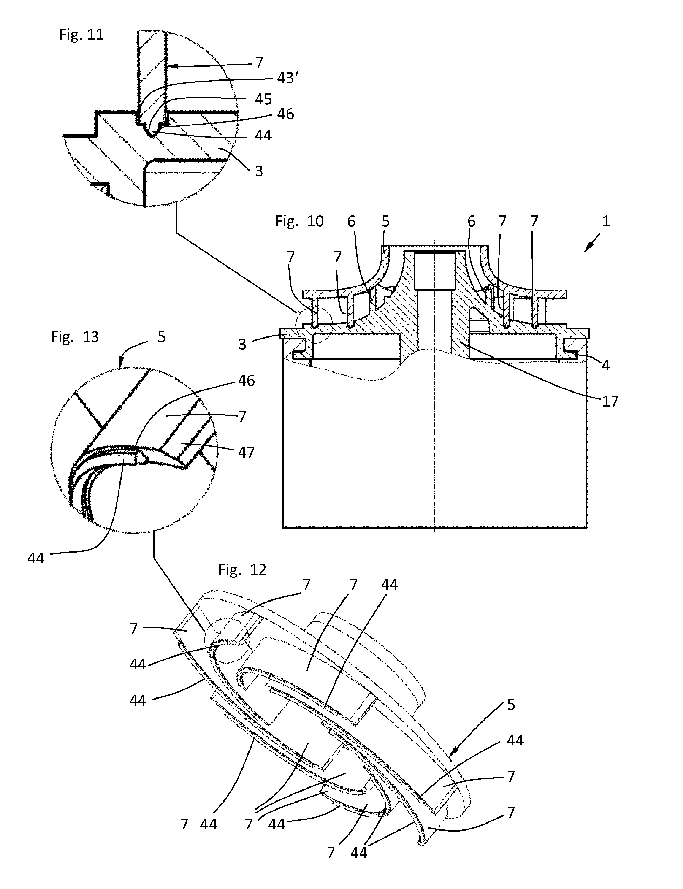

Fig. 10 zeigt einen Schnitt durch eine weitere Variante des Kreiselpumpenlaufrads 1, mit dem Grundkörper 3, der Deckscheibe 5, den Basisflügelsegmenten 6, den Decksscheibenflügelsegmenten 7, dem permanentmagnetischen Rotor 4 und dem Lagertragrohr 17. Die Variante ist durch als Energierichtungsgeber dienende V-förmig zulaufende Rippen 44 gekennzeichnet, die sich von den Deckscheibenflügelsegmenten 7 axial in korrespondierende nicht durchgängige Nuten 45 erstrecken (siehe Fig. 11). Diese Verbindungsgeometrie wird gewählt, wenn eine Ultraschallschweißverbindung hergestellt werden soll. Die V-förmig zulaufenden Rippen 44 (siehe Fig. 11) bewirken eine Konzentration der Schwingungsenergie, so dass das Material der Rippe 44 an ihrem Kamm aufschmilzt und sich mit dem umgebenden Material der Basiskörpers 3 verbindet.

Fig .11 stellt einen vergrößerten Ausschnitt aus Fig. 10 dar. Darin ist eines der Deckscheibenflügelsegmente 7 mit einer daran anschließenden gegenüber dem Deckscheibenflügelsegment 7 schmaleren rechteckigen Basisrippe 46 und die wiederum daran anschließenden V-förmig zulaufende Rippe 44 erkennbar. Die Rippe erstreckt sich in die Nut 45.

Fig. 12 ist eine dreidimensionale Darstellung der weiteren Variante der Deckscheibe 5, mit den Deckscheibenflügelsegmenten 7 und den Rippen 44. Deutlicher erkennbar wird die Geometrie der Rippe 44 in Fig. 13, die einen vergrößerten Ausschnitt aus Fig. 12 zeigt. Neben der V-förmigen Rippe 44 ist die Rippenbasis 46 und eine Schräge 47, mit der die radial außen liegenden Flügelenden versehen sind.

Bei allen Ausführungsvarianten ist vorgesehen, dass Die Deckscheibe 5, der Grundkörper 3 und die Trennwand aus PPS-Material besteht (Polyphenylensulfid), insbesondere PPS-GF40. Auch das Grundmaterial des kunststoffgebundenen Permanentmagneten besteht aus PPS. Als Magnetmaterial dient Ferrit. Der Gehäusedeckel 32 und das Pumpengehäuse 35 bestehen aus PPA-GF40 (Polyphthalamid).

**Bezugszeichenliste**

| | | | |
|---|---|---|---|
| 1 | Kreiselpumpenlaufrad | 29 | Trennwand |
| 2 | Pumpenflügel | 30 | Achse |
| 3 | Grundkörper | 31 | Motorgehäuse |
| 4 | permanentmagnetischer Rotor | 32 | Gehäusedeckel |
| 5 | Deckscheibe | 33 | Leiterplatte |
| 6 | Basisflügelsegment | 34 | Anschlussstecker |
| 7 | Deckscheibenflügelsegment | 35 | Pumpengehäuse |
| 8 | Begrenzungsfläche | 36 | Druckstutzen |
| 9 | Gemeinsame Ebene | 37 | Anschraubaugen |
| 10 | Lager | 38 | Kreiselpumpe |
| 11 | Einlaufschräge | 39 | Verbindungszapfen |
| 12 | Freiraum | 40 | Verbindungsdurchgänge |
| 13 | Saugstutzen | 41 | kegelförmige Erweiterung |
| 14 | Strömungsfläche | 42 | Endabschnitt |
| 15 | Zylinderringfläche | 43 | Einführhilfe |
| 16 | Kreisringfläche | 44 | Rippe |
| 17 | Lagertragrohr | 45 | Nut |
| 18 | Freisparung | 46 | Basisrippe |
| 19 | L-förmiger Bereich | 47 | Schräge |
| 20 | Nut | | |
| 21 | Lagerausnehmung | | |
| 22 | Begrenzung | | |
| 23 | Ansaugöffnung | | |
| 24 | Anlagefläche | | |
| 26 | Drehachse | | |
| 27 | Kreiselpumpenmotor | | |
| 28 | Stator | | |

## Patentansprüche

1. Kreiselpumpenlaufrad (1) mit Pumpenflügeln (2) aus einem spritzgusstechnisch verarbeitbarem Kunststoffmaterial, für eine elektromotorische Kreiselpumpe (38), bestehend aus einem ein Lager (10) umfassenden Grundkörper (3), an welchem einerseits ein permanentmagnetischer Rotor (4) und andererseits eine Deckscheibe (5) anschließt, welche an den Grundkörper (3) montiert ist, **dadurch gekennzeichnet, dass** eine Mehrzahl von Pumpenflügeln (2) zweiteilig ausgebildet ist, mit einem Basisflügelsegment (6), das mit dem Grundkörper (3) einstückig ist und einem Deckscheibenflügelsegment (7) das mit der Deckscheibe (5) einstückig ist.

2. Kreiselpumpenlaufrad nach Anspruch 1, **dadurch gekennzeichnet, dass** im Wesentlichen alle axialen, dem Grundkörper (3) benachbarten Begrenzungsflächen (8) der Deckscheibenflügelsegmente (7) in einer gemeinsamen Ebene (9) liegen.

3. Kreiselpumpenlaufrad nach Anspruch 2, **dadurch gekennzeichnet, dass** die axialen Begrenzungsflächen (8) der Deckscheibenflügelsegmente (7) an dem Grundkörper (3) anliegen.

4. Kreiselpumpenlaufrad nach Anspruch 3, **dadurch gekennzeichnet, dass** die Deckscheibenflügelsegmente (7) in Nuten (20) des Grundkörpers (3) eingreifen.

5. Kreiselpumpenlaufrad nach Anspruch 3 oder 4, **dadurch gekennzeichnet, dass** die Deckscheibenflügelsegmente (7) mit dem Grundkörper (3) durch Ultraschallschweißen oder durch Kleben verbunden sind.

6. Kreiselpumpenlaufrad nach Anspruch 3 oder 4, **dadurch gekennzeichnet, dass** die Deckscheibenflügelsegmente (7) mit dem Grundkörper (3) durch Heißverprägen von Verbindungszapfen (39) verbunden sind, welche sich vorzugsweise von den Deckscheibenflügelsegmenten (7) durch daran angepasste Verbindungsdurchgänge (40) des Grundkörpers (3) erstrecken.

7. Kreiselpumpenlaufrad nach zumindest einem der vorangehenden Ansprüche, **dadurch gekennzeichnet, dass** die Basisflügelsegmente (6) radial innerhalb der Deckscheibenflügelsegmente (7) angeordnet sind, an welche sie anschließen.

8. Kreiselpumpenlaufrad nach Anspruch 7, **dadurch gekennzeichnet, dass** die Basisflügelsegmente (6) Einlaufschrägen (11) aufweisen.

9. Kreiselpumpenlaufrad nach Anspruch 8, **dadurch gekennzeichnet, dass** sich die Flügelbreite der Basisflügelsegmente (6) durch die Einlaufschrägen (11) von einem Minimalwert radial innen bis zu einem Maximalwert radial außen erweitert.

10. Kreiselpumpenlaufrad nach Anspruch 9, **dadurch gekennzeichnet, dass** der Maximalwert der Flügelbreite der Basisflügelsegmente (6) einer Flügelbreite der Deckscheibenflügelsegmente (7) in einem radial inneren an die Basisflügelsegmente (6) anschließenden Bereich entspricht.

11. Kreiselpumpenlaufrad nach Anspruch 7, 8, 9 oder 10, **dadurch gekennzeichnet,** zwischen den Basisflügelsegmenten (6) und der Deckscheibe (5) ein sich nach radial außen zu den Deckscheibenflügelsegmenten (7) hin verengender Freiraum (12) vorhanden ist.

12. Kreiselpumpenlaufrad nach zumindest einem der vorangehenden Ansprüche, **dadurch gekennzeichnet, dass** der Grundkörper (3) eine Strömungsfläche (14) aufweist, die von einer von einem Saugstutzen (13) ausgehenden Zylinderringfläche kontinuierlich in eine Kreisringfläche übergeht, wobei die Strömungsfläche radial durch die Pumpenflügel (2) begrenzt ist und in einem Spiralförmigen Verlauf durchgängig in sich geschlossen ist.
